# EUROPÄISCHE PATENTANMELDUNG

(11) **EP 4 588 332 A1**
(43) Veröffentlichungstag der Anmeldung: **23.07.2025**
(21) Anmeldenummer: 24217469.6
(22) Anmeldetag: 04.12.2024
(51) Int. Cl.: A01D 43/08, A01F 29/06, A01F 29/22

(54) **SELBSTFAHRENDER FELDHÄCKSLER MIT EINER INDUKTIVEN ERFASSUNGSANORDNUNG**

(30) Priorität: 18.01.2024 DE 102024101455
(71) Anmelder: CLAAS Selbstfahrende Erntemaschinen GmbH, 33428 Harsewinkel (DE)
(72) Erfinder: Neitemeier, Dennis, 59510 Lippetal (DE); Cord-Kruse, Christian, 48231 Warendorf (DE); Klein Helmkamp, Marwin, 49080 Osnabrück (DE); Bönig Dr., Ingo, 33330 Gütersloh (DE); Wehner, Gregor, 88356 Ostrach Unterweiler (DE); Eggenhaus, Georg, 48369 Saerbeck (DE); Witte, Johann, 58730 Fröndenberg (DE); Goeres, Thomas, 33428 Harsewinkel (DE); Hinz, Patrick, 33428 Greffen (DE); Belau, Sven Carsten, 33332 Gütersloh (DE); Spachtholz, Christian, 88370 Ebenweiler (DE)
(74) Vertreter: Budach, Steffen

(57) **Zusammenfassung**

Die vorliegende Erfindung betrifft eine als selbstfahrenden Feldhäcksler (2) ausgeführte landwirtschaftliche Arbeitsmaschine (1) zum Aufnehmen, Bearbeiten und Weiterleiten von Erntegut. Dieser Feldhäcksler (2) weist eine Häckseleinrichtung (6) zum Zerkleinern des aufgenommenen Ernteguts auf, wobei die Häckseleinrichtung (6) ein Trommelgehäuse (21, 22) umfasst, in dem eine Häckseltrommel (7) und mehrere Häckselmesser (8) angeordnet sind, wobei diese Häckselmesser (8) lösbar, insbesondere auswechselbar, an der Häckseltrommel (7) angeordnet sind. Ferner umfasst der Feldhäcksler (2) eine induktive Erfassungsanordnung (25) zur Zustandserfassung der Häckseleinrichtung (6).

Die vorliegende Erfindung beruht auf dem allgemeinen Gedanken, dass in Abhängigkeit des mittels der induktiven Erfassungsanordnung (25) erfassten Parameters ermittelt wird, ob die Häckseleinrichtung (6) des Feldhäckslers ausschließlich bestimmungsgemäße Bauteile oder nicht bestimmungsgemäße Bauteile aufweist.

## Beschreibung

Die vorliegende Erfindung betrifft eine als selbstfahrender Feldhäcksler ausgeführte landwirtschaftliche Arbeitsmaschine zum Aufnehmen, Bearbeiten und Weiterleiten von Erntegut. Dieser Feldhäcksler weist eine Häckseleinrichtung zum Zerkleinern des aufgenommenen Ernteguts auf, wobei die Häckseleinrichtung ein Trommelgehäuse umfasst, in dem eine Häckseltrommel und mehrere Häckselmesser angeordnet sind, wobei diese Häckselmesser lösbar, insbesondere auswechselbar, an der Häckseltrommel angeordnet sind. Ferner umfasst der Feldhäcksler eine induktive Erfassungsanordnung zur Zustandserfassung der Häckseleinrichtung.

Aus der DE 10 2017 103 537 ist eine Sensoranordnung bekannt, die mittels induktiver Sensoren die umlaufenden Messer einer Häckseltrommelanordnung detektiert und aus dem ermittelten magnetischen Fluss einen Verschleißzustand der Häckselmesser ableitet, wobei sich der Verschleiß aus der jeweils induzierten Spannung ergibt.

Zwar ist der Verschleißzustand der Häckselmesser ein wichtiger Parameter, jedoch könnten die mittels der induktiven Erfassungsanordnung erfassten Daten bei einer umfassenderen Datenanalyse eingesetzt werden, um weitere wichtige Parameter zu ermitteln.

Der vorliegenden Erfindung liegt die Aufgabe zugrunde, eine verbesserte Ausführungsform des selbstfahrenden Feldhäckslers anzugeben, wobei die induktive Erfassungsanordnung in einem erweiterten Einsatzspektrum verwendet wird, um eine Kostensenkung und/oder Effizienzerhöhung zu erzielen.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass in Abhängigkeit des mittels der induktiven Erfassungsanordnung erfassten Parameters ermittelt wird, ob die Häckseleinrichtung ausschließlich bestimmungsgemäße Bauteile des Feldhäckslers oder nicht bestimmungsgemäße Bauteile aufweist. Sollte die Häckseleinrichtung ein nicht bestimmungsgemäßes Bauteil aufweisen, kann dieses nachteilige nicht bestimmungsgemäßes Bauteil gegen ein bestimmungsgemäßes Bauteil ausgetauscht werden, sodass die volle Leistungsfähigkeit des selbstfahrenden Feldhäckslers erhöht, die Kraftstoff- und Wartungskosten reduziert und die landwirtschaftliche Arbeitsqualität optimiert wird.

Der erfindungsgemäße selbstfahrende Feldhäcksler umfasst einen Erntevorsatz zur Aufnahme von Erntegut und die Häckseleinrichtung zum Zerkleinern des aufgenommenen Ernteguts. Die Häckseleinrichtung weist ein Trommelgehäuse auf, in dem eine Häckseltrommel und mehrere Häckselmesser angeordnet sind, wobei die Häckselmesser lösbar, insbesondere auswechselbar, mit der Häckseltrommel verbunden sind. Zusätzlich ist an dem Trommelgehäuse eine Messerschleifeinrichtung mit einem Schleifstein zur Schleifung der Häckselmesser ausgebildet. Die Messerschleifeinrichtung kann derart ausgebildet sein, dass deren Schleifstein horizontal über die Breite der Häckseltrommel bewegbar ist, sodass jedes an der Häckseltrommel positionierte Häckselmesser schleifbar ist.

Zusätzlich weist der selbstfahrende Feldhäcksler eine induktive Erfassungsanordnung zur Erfassung eines Parameters bezüglich der Häckseleinrichtung auf, die am Trommelgehäuse der Häckseleinrichtung angeordnet ist. Weitere Details bezüglich dieser induktiven Erfassungsanordnung ergeben sich aus der DE 10 2019 112 968 A1, auf deren Offenbarungsgehalt hiermit vollumfänglich Bezug genommen wird.

Eine Einstellvorrichtung ist zur Einstellung des Feldhäckslers vorgesehen, wobei die Einstellvorrichtung kommunizierend mit der induktiven Erfassungsanordnung und/oder mit der Messerschleifeinrichtung verbunden ist. Zwecks einer Aktivierung oder Deaktivierung eines Messerschleifvorganges ist die Messerschleifeinrichtung kommunizierend mit der Einstellvorrichtung verbunden. Zwecks einer Aktivierung oder Deaktivierung einer Parametererfassung ist die induktive Erfassungsanordnung kommunizierend mit der Einstellvorrichtung verbunden. Außerdem ist die induktive Erfassungsanordnung mit der Einstellvorrichtung für den Austausch des erfassten Parameters kommunizierend verbunden.

Die Einstellvorrichtung kann als Steuer- und/oder Regelvorrichtung ausgebildet sein, die eine Einstellung durch eine Steuerung und/oder Regelung des selbstfahrenden Feldhäckslers, insbesondere von Komponenten, insbesondere des Vorsatzgerätes und/oder der Arbeitsaggregate und/oder der induktiven Erfassungsanordnung und/oder der Messerschleifeinrichtung, des selbstfahrenden Feldhäckslers, bewirkt. Die Einstellvorrichtung kann eine Recheneinheit, insbesondere eine computerbasierte Recheneinheit, und einen Datenspeicher, insbesondere einen computerlesbaren Datenspeicher, aufweisen.

Unter einer kommunizierenden Verbindung kann zu verstehen sein, dass zwischen zwei miteinander kommunizierend verbundenen Komponenten eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind. Diese kommunizierende Verbindung, insbesondere bei mehr als zwei Komponenten, kann ein Bussystem ausbilden. Die kommunizierende Verbindung kann insbesondere kabellos und/oder drahtlos ausgebildet sein.

Die Einstellvorrichtung ist dazu vorgesehen und eingerichtet, insbesondere dazu ausgebildet und/oder programmiert, in Abhängigkeit des mittels der induktiven Erfassungsanordnung erfassten Parameters und einem datentechnisch hinterlegten Originalparameter, der einem mittels der induktiven Erfassungsanordnung erfassten Parameter bezüglich einer bestimmungsgemäßen Häckseleinrichtung des Feldhäckslers entspricht, zu ermitteln, ob die Häckseleinrichtung ausschließlich bestimmungsgemäße Bauteile oder wenigstens ein nicht bestimmungsgemäßes Bauteil aufweist. Der Originalparameter kann im Datenspeicher der Einstellvorrichtung und/oder in einem Datenspeicher außerhalb der Einstellvorrichtung hinterlegt sein.

Somit wird die induktive Erfassungsanordnung im erweiterten Einsatzspektrum verwendet, nämlich beim Ermitteln nachteiliger Nachbauteile, um einer Kostenerhöhung und/oder Effizienzsenkung des selbstfahrenden Feldhäckslers entgegenzuwirken.

Bei einer vorteilhaften Weiterbildung der erfindungsgemäßen Lösung ist vorgesehen, dass der datentechnisch hinterlegte Originalparameter einem mittels der induktiven Erfassungsanordnung erfassten Parameter, insbesondere einem Geometrieparameter und/oder einem Materialparameter, eines bestimmungsgemäßen Häckselmessers des Feldhäckslers entspricht, wobei die Einstellvorrichtung dazu vorgesehen und eingerichtet ist, zu ermitteln, ob ein Häckselmesser der Häckseleinrichtung ein bestimmungsgemäßes Bauteil oder nicht bestimmungsgemäßes Bauteil ausbildet. Somit wird geprüft, ob genau die richtigen und verlässlichen Häckselmesser eingesetzt werden, oder minderwertige Häckselmesser genutzt werden, die zu einer Kostenerhöhung und/oder Effizienzsenkung des selbstfahrenden Feldhäckslers führen würden.

Bei einer vorteilhaften Weiterbildung der erfindungsgemäßen Lösung ist vorgesehen, dass die induktive Erfassungsanordnung zur Verschleißzustandserfassung der Häckselmesser ausgebildet ist, wobei die Einstellvorrichtung dazu vorgesehen und eingerichtet ist, eine Schleifung eines Häckselmessers in Abhängigkeit des erfassten Verschleißzustandes zu initiieren und während des Schleifens einen Schleifparameter bezüglich des Häckselmessers mittels der induktiven Erfassungsanordnung zu erfassen und diesen erfassten Schleifparameter mit einem datentechnisch hinterlegten Originalschleifparameter zu vergleichen, um zu ermitteln, ob das geschliffene Häckselmesser ein bestimmungsgemäßes Bauteil oder nicht bestimmungsgemäßes Bauteil ausbildet. Somit wird durch das Schleifen aktiv geprüft, ob genau die richtigen und verlässlichen Häckselmesser eingesetzt werden, oder minderwertige Häckselmesser verwendet werden.

Bei einer vorteilhaften Weiterbildung der erfindungsgemäßen Lösung ist vorgesehen, dass der datentechnisch hinterlegte Originalschleifparameter einem mittels der induktiven Erfassungsanordnung erfassten Schleifparameter eines bestimmungsgemäßen Häckselmessers des Feldhäckslers entspricht.

Bei einer vorteilhaften Weiterbildung der erfindungsgemäßen Lösung ist vorgesehen, dass der Schleifparameter einen Schleifabtrag des geschliffenen Häckselmessers umfasst und mit einem datentechnisch hinterlegten Originalschleifabtrag eines bestimmungsgemäßen Häckselmessers verglichen wird.

Bei einer vorteilhaften Weiterbildung der erfindungsgemäßen Lösung ist vorgesehen, dass der datentechnisch hinterlegte Originalparameter einen mittels der induktiven Erfassungsanordnung erfassten Parameter eines bestimmungsgemäßen Schleifsteins des Feldhäckslers umfasst, wobei die Einstellvorrichtung dazu vorgesehen und eingerichtet ist, zu ermitteln, ob der Schleifstein ein bestimmungsgemäßes Bauteil oder nicht bestimmungsgemäßes Bauteil ist. Hierdurch wird geprüft, ob der richtige und verlässliche Schleifstein eingesetzt wird, der eine ausreichende und optimale Schleifung der Häckselmesser ermöglicht.

Bei einer vorteilhaften Weiterbildung der erfindungsgemäßen Lösung ist vorgesehen, dass die Einstellvorrichtung dazu eingerichtet ist, Einstellungsmöglichkeiten des selbstfahrenden Feldhäckslers und/oder automatische Betriebsmöglichkeiten des selbstfahrenden Feldhäckslers einzuschränken, insbesondere nicht zu ermöglichen, falls die Häckseleinrichtung ein nicht bestimmungsgemäßes Bauteil aufweist. Hierdurch wird einer Kostenerhöhung und/oder Effizienzsenkung aufgrund des Einsatzes unbekannter Häckselmesser aktiv entgegengewirkt.

Bei einer vorteilhaften Weiterbildung der erfindungsgemäßen Lösung ist vorgesehen, dass die Einstellvorrichtung dazu vorgesehen und eingerichtet ist, Einstellungsmöglichkeiten des selbstfahrenden Feldhäckslers und/oder automatische Betriebsmöglichkeiten des selbstfahrenden Feldhäckslers einzuschränken, falls der Schleifstein der Messerschleifeinrichtung ein nicht bestimmungsgemäßes Bauteil ausbildet. Somit wird einer Kostenerhöhung und/oder Effizienzsenkung aufgrund des Einsatzes eines unbekannten Schleifsteins entgegengewirkt.

Bei einer vorteilhaften Weiterbildung der erfindungsgemäßen Lösung ist vorgesehen, dass der selbstfahrende Feldhäcksler innerhalb einer Fahrerkabine eine Anzeigeeinheit aufweist, wobei die Einstellvorrichtung dazu vorgesehen und eingerichtet ist, einen optischen und/oder akustischen Hinweis für einen Fahrer des Feld-häcksler mittels der Anzeigeeinheit zu initiieren, falls ermittelt wurde, dass die Häckseleinrichtung ein nicht bestimmungsgemäßes Bauteil aufweist.

Alternativ oder zusätzlich ist vorgesehen, dass die Einstellvorrichtung einen nichtflüchtigen computerlesbaren Datenspeicher aufweist, wobei die Einstellvorrichtung dazu vorgesehen und eingerichtet ist, einen Hinweis im Datenspeicher zu hinterlegen, falls ermittelt wurde, dass die Häckseleinrichtung ein nicht bestimmungsgemäßes Bauteil aufweist.

Bei einer vorteilhaften Weiterbildung der erfindungsgemäßen Lösung ist vorgesehen, dass das bestimmungsgemäße Bauteil ein Häckselmesser des Herstellers des Feldhäckslers und/oder einem Schleifsteins des Herstellers des Feldhäckslers ist, und/oder dass das nicht bestimmungsgemäße Bauteil ein Nachbauteil, insbesondere ein unbekanntes Nachbauteil, ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Darstellung eines selbstfahrenden Feldhäckslers in Seitenansicht, und
- Fig. 2: eine Detailansicht des Feldhäckslers nach Figur 1 mit einer induktiven Sensoranordnung.

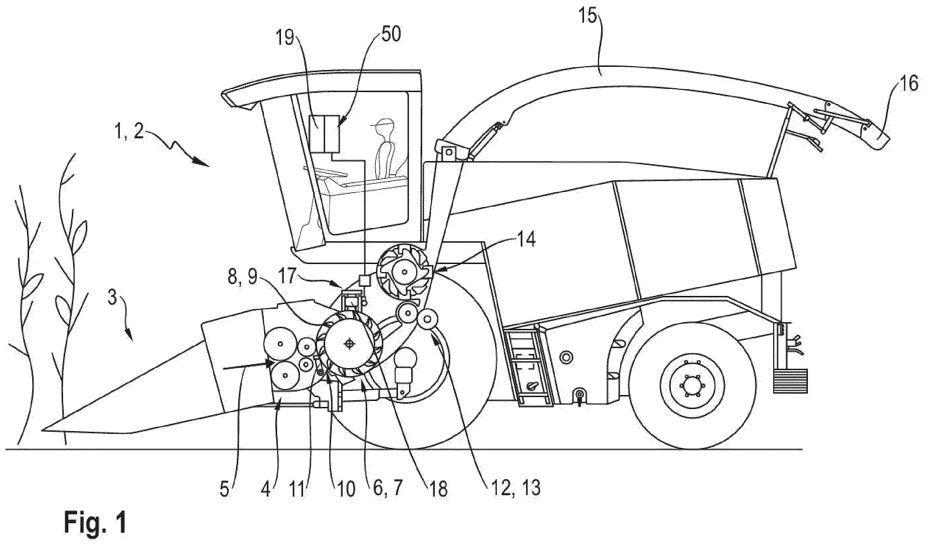

Die Fig. 1 zeigt schematisch eine als selbstfahrender Feldhäcksler 2 ausgeführte landwirtschaftliche Arbeitsmaschine 1, die in ihrem frontseitigen Bereich einen Erntevorsatz 3 aufnimmt. Im rückwärtigen Bereich des Erntevorsatzes 3 sind diesem sogenannte Einzugs- und Vorpresswalzen 4 zugeordnet, die den Erntegutstrom 5 aus dem Erntevorsatz 3 kommend annehmen, verdichten und in ihrem rückwärtigen Bereich an eine Häckseleinrichtung 6 übergeben. Die Häckseleinrichtung 6 umfasst eine Häckseltrommel 7, die mit Häckselmessern 8 einer Häckselmesseranordnung 9 bestückt ist. Die umlaufenden Häckselmesser 8 werden im Einzugsbereich 10 der Häckseltrommel 7 an einer sogenannten Gegenschneide 11, über die der zu zerkleinernde Erntegutstrom 5 gefördert wird, vorbeibewegt.

Im rückwärtigen Bereich der Häckseltrommel 7 wird das zerkleinerte Erntegut 5 sodann entweder an eine als sogenannter Cracker 12 ausgeführte Nachzerkleinerungseinrichtung 13 oder direkt an eine Nachbeschleunigungseinrichtung 14 übergeben. Während die Nachzerkleinerungseinrichtung 13 die körnigen Bestandteile des Erntegutstromes 5, etwa Maiskörner, weiter zerkleinert beschleunigt der Nachbeschleuniger 14 den Erntegutstrom 5 in einer Weise, dass dieser durch einen Auswurfkrümmer 15 bewegt und endseitig im Bereich einer Auswurfklappe 16 aus dem Feldhäcksler 2 austreten und an ein nicht dargestelltes Transportfahrzeug übergeben werden kann. Zudem ist der Häckseltrommel 7 umfangseitig eine an sich bekannte und daher hier nicht im Detail beschriebene Messerschleifeinrichtung 17 zugeordnet, deren Schleifstein 18 horizontal über die Breite der Häckseltrommel 7 bewegbar ist, sodass jedes am Umfang der Häckseltrommel 7 positionierte Häckselmesser 8 schleifbar ist. Zwecks Aktivierung oder Deaktivierung des Messerschleifvorganges ist die Messerschleifeinrichtung 17 in signalübertragender Weise mit einer Einstellvorrichtung 19 verbunden.

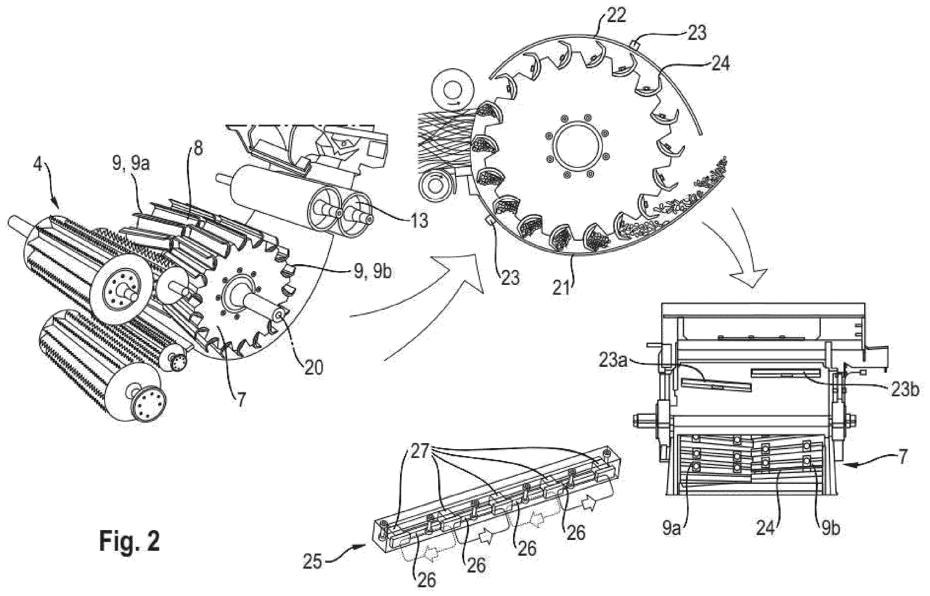

Gemäß Fig. 2 umfasst die Häckselmesseranordnung 9 rechts- und linksseitige Häckselmesseranordnungen 9a, 9b, wobei jede Häckselmesseranordnung 9a, 9b eine Vielzahl am Umfang der Häckseltrommel 7 schräg zur Drehachse 20 der Häckseltrommel 7 positionierte Häckselmesser 8 umfasst. Die Häckseltrommel 7 wird unterseitig von einem vorzugsweise aus Edelstahl bestehenden Trommelboden 21 ummantelt. Oberseitig wird die Häckseltrommel 7 von einer vorzugsweise ebenfalls aus Edelstahl bestehenden Trommelrückwand 22 umschlossen. Die Trommelrückwand 22 und der Trommelboden 21 bilden das Trommelgehäuse aus.

Eine Sensoranordnung 23 kann gemäß dem in der Fig. 2 dargestellten Ausführungsbeispiel entweder an der Trommelrückwand 22 oder am Trommelboden 21 positioniert sein. Es ist auch denkbar, dass zugleich sowohl am Trommelboden 21 als auch an der Trommelrückwand 22 eine Sensoranordnung 23 angeordnet ist. Unabhängig von der konkreten Positionierung sind jeder Häckseltrommel 7 zumindest zwei Sensoranordnungen 23a, 23b in der Weise zugeordnet, dass jeweils eine der Sensoranordnungen 23a, 23b der jeweils zugehörigen Häckselmesseranordnung 9a, 9b zugeordnet ist, wobei jede Sensoranordnung 23a, 23b die Schneidkante 24 des jeweiligen Häckselmessers 7 vollständig überdeckt, sodass jede Schneidkante 24 über ihrer gesamten Länge durch die jeweilige Sensoranordnung 23a, 23b detektiert werden kann. Weiter liegt es im Rahmen der Erfindung, dass die jeweilige Sensoranordnung 23a, 23b entweder parallel zur Drehachse 20 der Häckseltrommel 7 oder parallel zur Schneidkante 24 der Häckselmesser 8 am Trommelboden 21 und/oder der Trommelrückwand 22 positioniert ist. Die rechte untere Darstellung in Figur 2 zeigt nur beispielhaft die möglichen Ausrichtungen der Sensoranordnungen 23a, 23b in einer einzigen Darstellung. Vorzugsweise werden alle Sensoranordnungen 23a, 23b entweder parallel zur Drehachse 20 der Häckseltrommel 7 oder parallel zur Schneidkante 24 der Häckselmesser 8 positioniert sein.

Im dargestellten Ausführungsbeispiel der Fig. 2 sind die Sensoranordnungen 23a, 23b als induktive Erfassungsanordnungen 25 ausgeführt, wobei jede Sensoranordnung 23 ein oder mehrere magnetische Erregeranordnungen 26 sowie jeweils eine mit diesen zusammenwirkende Polanordnung 27 umfasst. Diese induktive Erfassungsanordnung 25 ist zur Erfassung eines Parameters bezüglich der Häckseleinrichtung 6 vorgesehen und ausgebildet. Weitere Details bezüglich der induktiven Erfassungsanordnungen 25 ergeben sich aus der DE 10 2019 112 968 A1, auf deren Offenbarungsgehalt hiermit vollumfänglich Bezug genommen wird.

Erfindungsgemäß ist die Einstellvorrichtung 19 dazu vorgesehen und eingerichtet, in Abhängigkeit des mittels der induktiven Erfassungsanordnung 25 erfassten Parameters und einem datentechnisch hinterlegten Originalparameter, der einem mittels der induktiven Erfassungsanordnung 25 erfassten Parameter bezüglich einer bestimmungsgemäßen Häckseleinrichtung 6 des Feldhäckslers 2 entspricht, zu ermitteln, ob die Häckseleinrichtung 6 ausschließlich bestimmungsgemäße Bauteile oder ein nicht bestimmungsgemäßes Bauteil aufweist. Sollte die Häckseleinrichtung 6 ein nicht bestimmungsgemäßes Bauteil aufweisen, kann dieses nachteilige Nachbauteil gegen ein Originalteil ausgetauscht werden, sodass die volle Leistungsfähigkeit des selbstfahrenden Feldhäckslers 2 erhöht, die Kraftstoff- und Wartungskosten reduziert und die landwirtschaftliche Arbeitsqualität optimiert wird.

Der datentechnisch hinterlegte Originalparameter kann einem mittels der induktiven Erfassungsanordnung 25 erfassten Parameter eines bestimmungsgemäßen Häckselmessers 8 des Feldhäckslers 2 entsprechen, wobei die Einstellvorrichtung 19 dann dazu vorgesehen ist, zu ermitteln, ob ein Häckselmesser 8 der Häckseleinrichtung 6 ein bestimmungsgemäßes Bauteil oder nicht bestimmungsgemäßes Bauteil ausbildet.

Die induktive Erfassungsanordnung 25 ist zur Verschleißzustandserfassung der Häckselmesser 8 ausgebildet, wobei die Einstellvorrichtung 19 dazu eingerichtet ist, eine Schleifung eines Häckselmessers 8 mittels der Messerschleifeinrichtung 17 in Abhängigkeit des erfassten Verschleißzustandes zu initiieren und während des Schleifens einen Schleifparameter bezüglich des Häckselmessers 8 mittels der induktiven Erfassungsanordnung 25 zu erfassen und diesen erfassten Schleifparameter mit einem datentechnisch hinterlegten Originalschleifparameter zu vergleichen, um zu ermitteln, ob das Häckselmesser 8 ein bestimmungsgemäßes Bauteil oder nicht bestimmungsgemäßes Bauteil ausbildet. Der hinterlegte Originalschleifparameter kann einem mittels der induktiven Erfassungsanordnung 25 erfassten Schleifparameter eines bestimmungsgemäßen Häckselmessers 8 des Feldhäckslers 2 entsprechen, wobei dieser Schleifparameter einen Schleifabtrag des geschliffenen Häckselmessers 8 umfassen kann.

Zusätzlich oder alternativ kann der datentechnisch hinterlegte Originalparameter einen mittels der induktiven Erfassungsanordnung 25 erfassten Parameter eines bestimmungsgemäßen Schleifsteins 18 des Feldhäckslers 2 umfassen, mit dem die Einstellvorrichtung 19 ermittelt, ob der Schleifstein 18 ein bestimmungsgemäßes Bauteil oder nicht bestimmungsgemäßes Bauteil ausbildet.

Die Einstellvorrichtung 19 ist dazu vorgesehen und eingerichtet, Einstellungsmöglichkeiten des selbstfahrenden Feldhäckslers 2 und/oder automatische Betriebsmöglichkeiten des selbstfahrenden Feldhäckslers 2 einzuschränken, falls die Häckseleinrichtung 6, insbesondere das Häckselmesser 8 und/oder der Schleifstein 18, ein nicht bestimmungsgemäßes Bauteil ausbildet.

Wie in der Fig. 1 angedeutet, weist der selbstfahrende Feldhäcksler 2 innerhalb einer Fahrerkabine eine Anzeigeeinheit 50 auf, wobei die Einstellvorrichtung 19 dazu eingerichtet ist, einen optischen und/oder akustischen Hinweis für einen Fahrer des Feldhäckslers 2 mittels der Anzeigeeinheit 50 zu initiieren, falls ermittelt wurde, dass die Häckseleinrichtung 6 ein nicht bestimmungsgemäßes Bauteil aufweist. Alternativ oder zusätzlich kann die Einstellvorrichtung 19 einen nicht dargestellten computerlesbaren Datenspeicher aufweisen, in dem ein Hinweis hinterlegt wird, falls ermittelt wurde, dass die Häckseleinrichtung 6 ein nicht bestimmungsgemäßes Bauteil aufweist.

### Bezugszeichenliste

- 1: landwirtschaftliche Arbeitsmaschine
- 2: Selbstfahrender Feldhäcksler
- 3: Erntevorsatz
- 4: Einzugs- und Vorpresswalzen
- 5: Erntegutstrom
- 6: Häckseleinrichtung
- 7: Häckseltrommel
- 8: Häckselmesser
- 9: Häckselmesseranordnung a... b
- 10: Einzugsbereich
- 11: Gegenschneide
- 12: Cracker
- 13: Nachzerkleinerungseinrichtung
- 14: Nachbeschleunigungseinrichtung
- 15: Auswurfkrümmer
- 16: Auswurfkrümmerklappe
- 17: Messerschleifeinrichtung
- 18: Schleifstein
- 19: Einstellvorrichtung
- 20: Drehachse der Häckseltrommel
- 21: Trommelboden
- 22: Trommelrückwand
- 23: Sensoranordnung a...b
- 24: Schneidkante
- 25: induktive Erfassungsanordnung
- 26: magnetische Erregeranordnung
- 27: Polanordnung

- 50: Anzeigeeinheit

## Patentansprüche

1. Selbstfahrender Feldhäcksler (2)
- mit einem Erntevorsatz (3) zur Aufnahme von Erntegut,
- mit einer Häckseleinrichtung (6) zum Zerkleinern des aufgenommenen Ernteguts, wobei die Häckseleinrichtung (6) ein Trommelgehäuse (21, 22) aufweist, in dem eine Häckseltrommel (7) und mehrere Häckselmesser (8) angeordnet sind, wobei die Häckselmesser (8) lösbar mit der Häckseltrommel (7) verbunden sind, wobei an dem Trommelgehäuse (21, 22) eine Messerschleifeinrichtung (17) mit einem Schleifstein (18) zur Schleifung der Häckselmesser (8) ausgebildet ist,
- mit einer induktiven Erfassungsanordnung (25) zur Erfassung eines Parameters bezüglich der Häckseleinrichtung (6), wobei die Erfassungsanordnung (25) am Trommelgehäuse (21, 22) der Häckseleinrichtung (6) angeordnet ist,
- mit einer Einstellvorrichtung (19) zur Einstellung des Feldhäckslers (2), wobei die Einstellvorrichtung (19) kommunizierend mit der induktiven Erfassungsanordnung (25) verbunden ist,
**dadurch gekennzeichnet,**
- **dass** die Einstellvorrichtung (19) dazu vorgesehen und eingerichtet ist, den mittels der induktiven Erfassungsanordnung (25) erfassten Parameter mit einem datentechnisch hinterlegten Parameter zu vergleichen, um Abweichungen zu identifizieren und/oder zu ermitteln und/oder zu visualisieren.

2. Selbstfahrender Feldhäcksler (2) nach Anspruch 1,
**dadurch gekennzeichnet,**
**dass** die Einstellvorrichtung (19) dazu vorgesehen und eingerichtet ist, in Abhängigkeit des mittels der induktiven Erfassungsanordnung (25) erfassten Parameters und einem datentechnisch hinterlegten Originalparameter, der einem mittels der induktiven Erfassungsanordnung (25) erfassten Parameter bezüglich einer bestimmungsgemäßen Häckseleinrichtung (6) des Feldhäckslers (2) entspricht, zu ermitteln, ob die Häckseleinrichtung (6) ausschließlich bestimmungsgemäße Bauteile oder wenigstens ein nicht bestimmungsgemäßes Bauteil aufweist.

3. Selbstfahrender Feldhäcksler (2) nach Anspruch 2,
**dadurch gekennzeichnet,**
- **dass** der datentechnisch hinterlegte Originalparameter einem mittels der induktiven Erfassungsanordnung (25) erfassten Parameter, insbesondere einem Geometrieparameter und/oder einem Materialparameter, eines bestimmungsgemäßen Häckselmessers (8) des Feldhäckslers (2) entspricht,
- wobei die Einstellvorrichtung (19) dazu vorgesehen und eingerichtet ist, zu ermitteln, ob ein Häckselmesser (8) der Häckseleinrichtung (6) ein bestimmungsgemäßes Bauteil oder nicht bestimmungsgemäßes Bauteil ausbildet.

4. Selbstfahrender Feldhäcksler (2) nach einem der vorhergehenden Ansprüche,
**dadurch gekennzeichnet,**
- **dass** die induktive Erfassungsanordnung (25) zur Verschleißzustandserfassung der Häckselmesser (8) ausgebildet ist,
- wobei die Einstellvorrichtung (19) dazu vorgesehen und eingerichtet ist, eine Schleifung eines Häckselmessers (8) in Abhängigkeit des erfassten Verschleißzustandes zu initiieren und während des Schleifens einen Schleifparameter bezüglich des Häckselmessers (8) mittels der induktiven Erfassungsanordnung (25) zu erfassen und diesen erfassten Schleifparameter mit einem datentechnisch hinterlegten Originalschleifparameter zu vergleichen, um zu ermitteln, ob das geschliffene Häckselmesser (8) ein bestimmungsgemäßes Bauteil oder nicht bestimmungsgemäßes Bauteil ausbildet.

5. Selbstfahrender Feldhäcksler (2) nach Anspruch 4,
**dadurch gekennzeichnet,**
**dass** der datentechnisch hinterlegte Originalschleifparameter einem mittels der induktiven Erfassungsanordnung (25) erfassten Schleifparameter eines bestimmungsgemäßen Häckselmessers (8) des Feldhäckslers (2) entspricht.

6. Selbstfahrender Feldhäcksler (2) nach Anspruch 4 oder 5,
**dadurch gekennzeichnet,**
**dass** der Schleifparameter einen Schleifabtrag des geschliffenen Häckselmessers (8) umfasst und mit einem datentechnisch hinterlegten Originalschleifabtrag eines bestimmungsgemäßen Häckselmessers (8) verglichen wird.

7. Selbstfahrender Feldhäcksler (2) nach einem der vorhergehenden Ansprüche,
**dadurch gekennzeichnet,**
- **dass** der datentechnisch hinterlegte Originalparameter einen mittels der induktiven Erfassungsanordnung (25) erfassten Parameter eines bestimmungsgemäßen Schleifsteins (18) des Feldhäckslers (2) umfasst,
- wobei die Einstellvorrichtung (19) dazu vorgesehen und eingerichtet ist, zu ermitteln, ob der Schleifstein (18) ein bestimmungsgemäßes Bauteil oder nicht bestimmungsgemäßes Bauteil ist.

8. Selbstfahrender Feldhäcksler (2) nach einem der vorhergehenden Ansprüche,
**dadurch gekennzeichnet,**
**dass** die Einstellvorrichtung (19) dazu vorgesehen und eingerichtet ist, Einstellungsmöglichkeiten des selbstfahrenden Feldhäckslers (2) und/oder automatische Betriebsmöglichkeiten des selbstfahrenden Feldhäckslers (2) einzuschränken, falls die Häckseleinrichtung (6) ein nicht bestimmungsgemäßes Bauteil aufweist.

9. Selbstfahrender Feldhäcksler (2) nach einem der vorhergehenden Ansprüche,
**dadurch gekennzeichnet,**
**dass** die Einstellvorrichtung (19) dazu vorgesehen und eingerichtet ist, Einstellungsmöglichkeiten des selbstfahrenden Feldhäckslers (2) und/oder automatische Betriebsmöglichkeiten des selbstfahrenden Feldhäckslers (2) einzuschränken, falls ein Häckselmesser (8) der Häckseleinrichtung (6) ein nicht bestimmungsgemäßes Bauteil ausbildet.

10. Selbstfahrender Feldhäcksler (2) nach einem der vorhergehenden Ansprüche,
**dadurch gekennzeichnet,**
**dass** die Einstellvorrichtung (19) dazu vorgesehen und eingerichtet ist, Einstellungsmöglichkeiten des selbstfahrenden Feldhäckslers (2) und/oder automatische Betriebsmöglichkeiten des selbstfahrenden Feldhäckslers (2) einzuschränken, falls der Schleifstein (18) der Messerschleifeinrichtung (17) ein nicht bestimmungsgemäßes Bauteil ausbildet.

11. Selbstfahrender Feldhäcksler (2) nach einem der vorhergehenden Ansprüche,
**dadurch gekennzeichnet,**
- **dass** der selbstfahrende Feldhäcksler (2) innerhalb einer Fahrerkabine eine Anzeigeeinheit (50) aufweist, wobei die Einstellvorrichtung (19) dazu vorgesehen und eingerichtet ist, einen optischen und/oder akustischen Hinweis für einen Fahrer des Feldhäckslers (2) mittels der Anzeigeeinheit (50) zu initiieren, falls ermittelt wurde, dass die Häckseleinrichtung (6) ein nicht bestimmungsgemäßes Bauteil aufweist, und/oder
- **dass** die Einstellvorrichtung (19) einen nichtflüchtigen computerlesbaren Datenspeicher aufweist, wobei die Einstellvorrichtung (19) dazu vorgesehen und eingerichtet ist, einen Hinweis im Datenspeicher zu hinterlegen, falls ermittelt wurde, dass die Häckseleinrichtung (6) ein nicht bestimmungsgemäßes Bauteil aufweist.

12. Selbstfahrender Feldhäcksler (2) nach einem der vorhergehenden Ansprüche,
**dadurch gekennzeichnet,**
- **dass** das bestimmungsgemäße Bauteil ein Originalbauteil, insbesondere ein originales Häckselmesser (8) und/oder ein originaler Schleifstein (18), des Herstellers des Feldhäckslers (2) ist, und/oder
- **dass** das nicht bestimmungsgemäße Bauteil ein Nachbauteil, insbesondere ein unbekanntes Nachbauteil, ist.
